# DEMANDE DE BREVET EUROPEEN

(11) **EP 0 086 156 A1**
(43) Date de publication de la demande: **17.08.1983**
(21) Numéro de dépôt: 83400245.3
(22) Date de dépôt: 04.02.1983
(51) Int. Cl.: F25B 49/00, H02J 3/14, G05D 23/19

(54) **Programmateur de commande pour centrale frigorifique multicompresseurs**

(30) Priorité: 09.02.1982 FR 8202055
(71) Demandeur: ETS BONNET, F-69653 Villefranche sur Saone (FR)
(72) Inventeur: Lay, Gérard, F-75379 Paris Cedex 08 (FR)
(74) Mandataire: Grynwald, Albert

(57) **Abrégé**

La présente invention concerne un programmateur de commande pour centrales frigorifiques multicompresseurs.

Elle est caractérisée en ce qu'elle comporte un organe (69-74) centralisateur de l'ensemble des démarrages (76) successifs d'un nombre prédéterminé de compresseurs en fonction de la température (67) frigorifique de la centrale ainsi que de la vitesse d'évolution (68) de cette température.

Application au domaine de la production de froid industriel.

## Description

La présente invention concerne un programmateur de commande pour centrale frigorifique multicompresseurs. Elle trouve application dans le domaine de la production de froid industriel.

Dans ce domaine, il est connu d'utiliser des centrales comportant plusieurs compresseurs. Il a aussi été développé des dispositifs pour commander le démarrage de chaque moteur des compresseurs de la centrale en fonction des températures détectées par des capteurs. Ces dispositifs (relais temporisés, combinateurs à cames ou doseurs cycliques) sont de type électromécanique.

Un premier inconvénient réside dans le manque relatif de fiabilité des dispositifs de nature électromécanique. Dans le cas d'une centrale frigorifique, une panne mineure du dispositif de commande, entraîne une panne générale de la centrale.

C'est un avantage de la présente invention de proposer une solution non électromécanique au problème de la commande. Le programmateur de commande selon l'invention comporte en effet un dispositif électronique programmable. Les autres avantages qui découlent de cette solution sont :
- l'aspect centralisé de la commande de la centrale,
- la souplesse d'intervention du dispositif dans les différents fonctionnements de la centrale,
- la possibilité de changer les ordres de commandes sans intervention matérielle sur le dispositif de commande quand un élément de la centrale est changé, mais par simple changement dans la programmation.

Un autre inconvénient des solutions de l'art antérieur réside dans l'aspect aléatoire des retards aux démarrages imposés par ces dispositifs. En effet, chacun de ces dispositifs électromécaniques, déroule une séquence immuable (sauf intervention manuelle d'un opérateur) qui comporte un instant d'autorisation de démarrage. Quand un capteur indique au programmateur qu'une demande de froid oblige la centrale à démarrer un compresseur, il faut attendre que le dispositif déroule la séquence jusqu'à l'instant d'autorisation de démarrage. Le retard au démarrage aura donc une durée complètement aléatoire relativement au fonctionnement de la centrale et dépendant seulement des caractéristiques du dispositif de commande électromécanique.

Un grand nombre d'inconvénients en découle qui sont notamment, qu'un compresseur de la centrale peut être arrêté juste après son démarrage et que plusieurs compresseurs peuvent être enclenchés successivement si les retards sont trop longs. Ces deux inconvénients entraînent respectivement une usure exagérée des compresseurs et une consommation anormale d'énergie électrique.

C'est un autre avantage de la présente invention de porter remède à ces divers inconvénients. En effet, le dispositif selon l'invention comporte des moyens pour adapter les retards au démarrage de chaque compresseur de la centrale au fonctionnement présent mais aussi passé de la centrale. Notamment, le dispositif selon l'invention permet de prendre en compte le problème de la tarification variable de l'énergie électrique, quand, comme c'est le plus souvent le cas, la centrale est reliée à un réseau de distribution d'énergie électrique vendue par un tiers à l'utilisateur de la centrale.

D'autre part, les dispositifs de l'art antérieur ne permettent pas de résorber les phénomènes de pompage. Dans les centrales, ces disfonctionnements sont constitués par une succession rapide de démarrages et d'arrêts de la centrale, la température de fonctionnement général oscillant de quelques degrés autour du point de fonctionnement choisi. Ces phénomènes peuvent notamment apparaître à la remise en marche de la centrale après une courte coupure accidentelle de son alimentation électrique. Le dispositif selon l'invention apporte remède à cet inconvénient en mémorisant, dans des mémoires souvegardées des coupures courtes de l'alimentation électrique, l'état de fonctionnement de chaque compresseur.

D'autres caractéristiques et avantages de la présente invention sont présentés à l'aide de la description et des figures annexées qui sont : ¹
- la figure 1 : un schéma de centrale frigorifique à 4 compresseurs,
- la figure 2 : un diagramme d'évolution de la température en fonction du temps selon l'art antérieur,
- la figure 3 : un diagramme d'évolution de la température en fonction du temps selon la présente invention,
- la figure 4 : 4 diagrammes des délais de fonctionnements selon la présente invention,
- la figure 5 : un diagramme des demandes de puissances électriques en fonction du temps,
- la figure 6 : un schéma général d'un exemple de réalisation du programmateur selon l'invention,
- la figure 7 : un circuit particulier du programmateur de la figure 6.

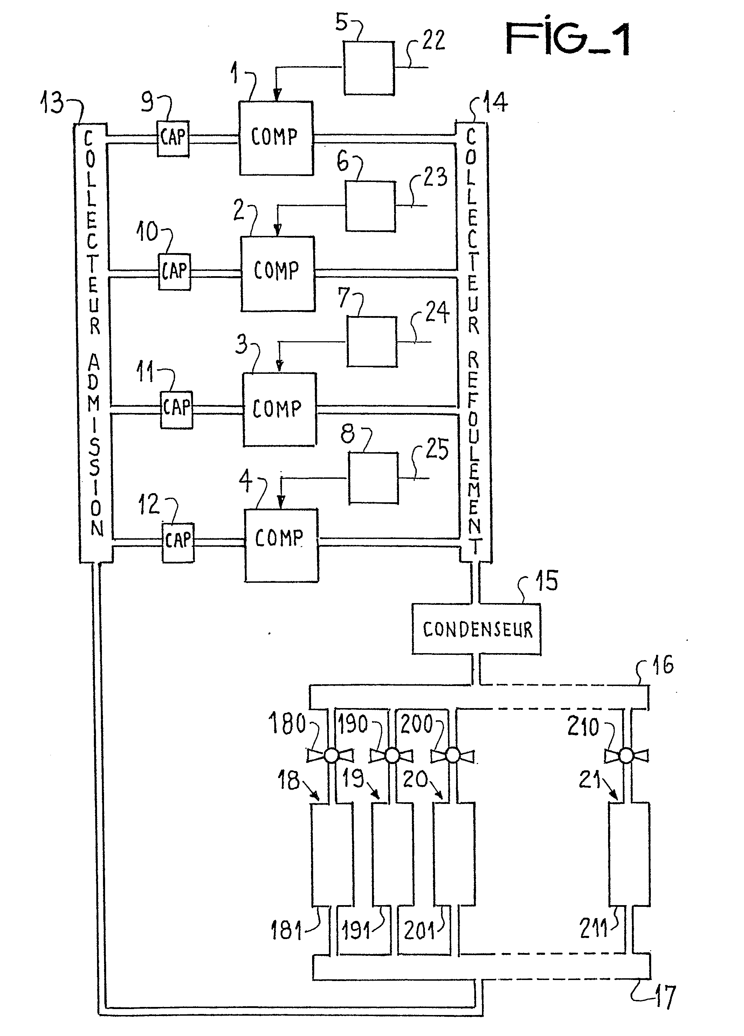

A la figure 1, on a représenté une centrale à quatre compresseurs. Les quatre compresseurs 1-4 sont placés en parrallèle sur deux collecteurs : le collecteur d'admission 13 et le collecteur de refoulement 14. Les compresseurs relèvent la pression de l'agent frigorigène. L'agent frigorigène à haute pression est envoyé à un condenseur 15. Le condenseur 15 liquéfie l'agent frigorigène. Le liquide est fourni à un collecteur 16 d'admission à différents postes de travail 18-21. Chaque poste est relié par une vanne 180-210 au collecteur 16. Chaque poste de production de froid 18-21 peut donc être mis en service indépendamment des autres. La production de froid à chaque poste est assurée par un évaporateur 181-211 : L'agent frigorigène est recueilli dans un collecteur 17 d'où il est renvoyé au collecteur d'admission 13 de retour du circuit.

Des capteurs 9-12 sont placés dans le circuit d'entrée de chaque compresseur 1-4. Ces capteurs, qui peuvent être du genre préssostat, permettent de mesurer la température de l'agent frigorigène à l'entrée du compresseur. Les données de températures servent à réguler le fonctionnement de l'installation. Enfin, des contacteurs 5, 8 commandés par un programmateur sont prévus pour permettre ou interdire, grâce à des conducteur 22 à 25 de connexion au réseau, l'alimentation en énergie électrique de ces compresseurs.

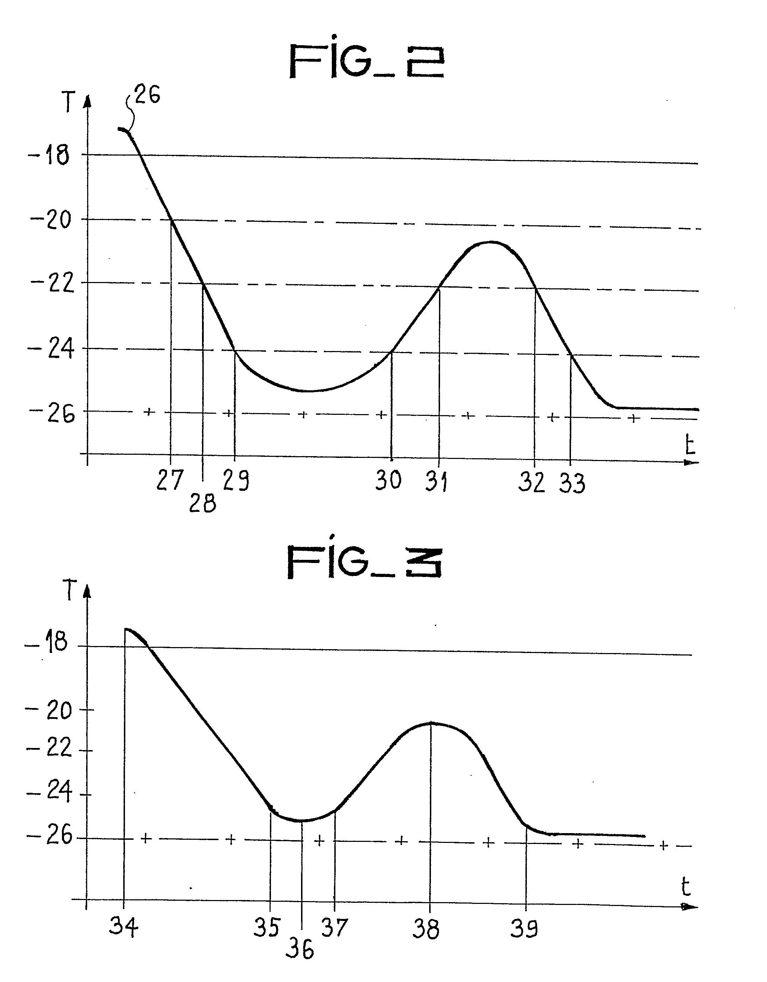

A la figure 2, on a représenté un diagramme de fonctionnement d'installation selon l'art antérieur. La courbe d'évolution de la température de la centrale frigorifique en fonction du temps est la courbe 26. Les capteurs utilisés ici sont du type à hystérésis. Ils comportent un niveau d'enclenchement et un niveau de déclenchement distincts. Le niveau commun d'enclenchement des capteurs est de -18°C. Chaque capteur déclenche à un niveau qui lui est propre. Ainsi, il a été prévu dans l'exemple de réalisation illustré ici des températures de déclenchement successives : -20, -22, -24 et 26°C. A l'instant 27, on constate que la température descend sous -20°. Le premier capteur associé au premier compresseur déclenche. Puis la température continue de diminuer. A l'instant 28 le deuxième capteur associé au deuxième compresseur s'éteint. Puis à l'instant 29, le passage sous -24° déclenche le troisième capteur. A cet instant, la température de fonctionnement atteint environ -25, 5°C. Un seul compresseur suffit à maintenir un équilibre. On voit que le quatrième compresseur fonctionne beaucoup plus souvent que les autres. A une remontée de la température, provoquée par une demande anormale de froid (dégivrages excessifs, ouvertures des ateliers de congélation dans un super marché, etc) l'ensemble des compresseurs est remis en marche. Au passage aux températures -22 et -24 les compresseurs 2 et 3 s'arrêtent.

Dans un tel fonctionnement, la charge de fonctionnement de chaque compresseur est inégalement répartie. Chaque compresseur démarre en fonction de deux critères. D'abord le compresseur reçoit une demande de démarrage au déclenchement du capteur qui lui est associé. Puis un doseur cyclique électro-mécanique de démarrage fourni après le dernier démarrage effectué. Une autorisation de démarrage transmise au contacteur du compresseur demandeur. Ce second critère permet de limiter le nombre des démarrages de chaque compressseur par unité de temps. Cette précaution limite le nombre d'appels de courant excessif au démarrage qui provoque un échauffement des enroulements et qui vieillit considérablement les compresseurs. Dans la pratique, on limite à dix démarrages par heure pour chaque compresseur. Pour celà, un compresseur ne peut démarrer une nouvelle fois que six minutes après son démarrage précédent.

A la figure 3, on a représenté un diagramme d'évolution de la température en fonction du temps dans un fonctionnement selon l'invention. Selon l'invention, un seul type de capteur est utilisé qui est placé au collecteur d'admission 13. Ce capteur déclenche par exemple à -26°. L'ensemble des compresseurs ne démarre qu'en fonction de chaque demande de froid particulière et du retard au démarrage. A l'instant 34, l'ensemble des compresseurs est en fonctionnement. Puis quand la demande de froid se stabilise et s'annule dans les instants 35, 36, 37 il est possible qu'aucun compresseur ne marche. Quand la demande de froid réapparaît et que la centrale ne réagit pas, la température remonte jusqu'à l'instant 38. Le démarrage des compresseurs étant effectué, la température redescend jusqu'à son niveau de fonctionnement normal, atteint à l'instant 39.

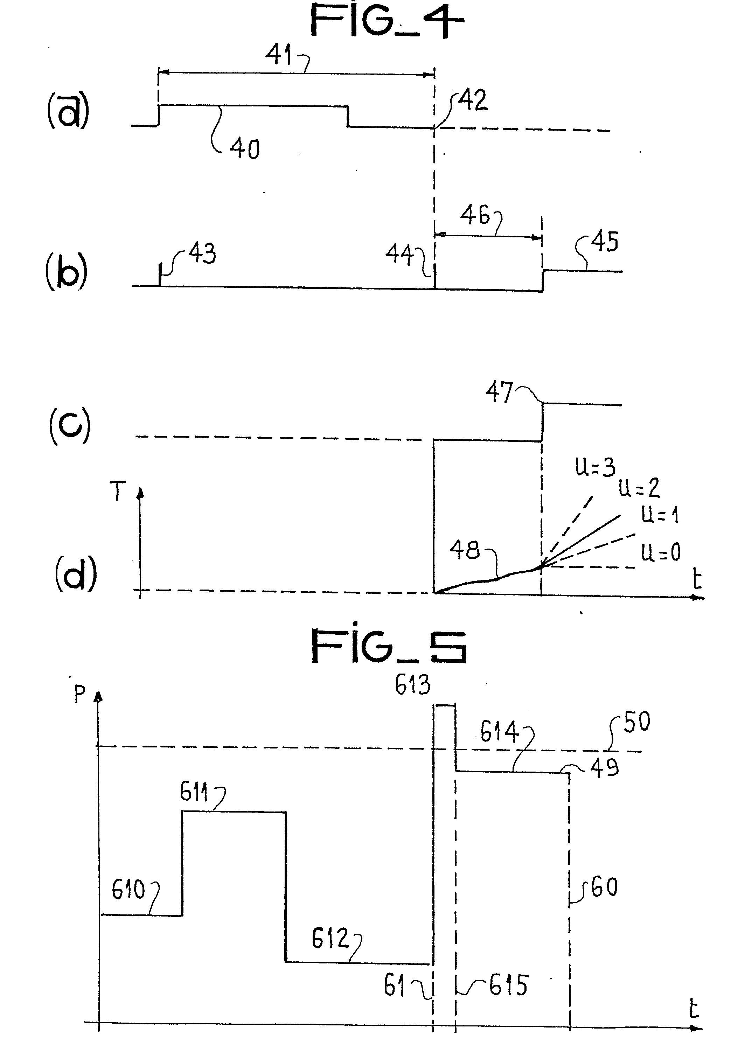

A la figure 4, on a représenté 4 diagrammes a, b, c, d de fixation des délais de démarrage de chaque compresseur dans le programmateur selon l'invention. Le diagramme de la figure 4a représente un fonctionnement pendant une durée 41 de 6 minutes. Le compresseur a démarré au début de la période 41 et s'est arrêté au bout du créneau de temps 40. Le critère de sauvegarde des compresseurs lui interdit de démarrer avant l'instant 42. Aucun démarrage n'est permis avant.

A la figure 4b, on a représenté un délai au démarrage ajouté dans un programmateur selon l'invention. A l'instant 43, un premier démarrage à eu lieu. La date suivante de permission de démarrage est l'instant 44. Selon l'invention, un retard de temps 46 supplémentaire peut être accordé au compresseur avant son démarrage 45. Ce retard supplémentaire 46 est utilisé pour permettre :
- des économies d'énergie,
- la mise en oeuvre d'un critère d'urgence au démarrage.

Aux diagrammes c et d, on a représenté une illustration de ce dernier critère dit d'urgence. Selon l'invention on affecte une valeur de 0 à 3 à l'urgence d'un démarrage. A la figure 4d, on a représenté l'évolution de la température T. La vitesse de variation de la température T est représentée à chaque instant par la pente de la courbe 48. A l'instant 47 du diagramme 4c, on note que la pente correspond à la valeur de l'urgence u valant deux unités (u = 2). A chaque valeur de cette urgence, on peut associer le nombre de compresseurs à démarrer successivement. Dans l'exemple de la figure 4c, il apparaît que l'on a dû attendre l'instant 47 après l'instant 44 de démarrage permis pour démarrer réellement le compresseur, la pente moyenne à la figure 4d indiquant une pente moyenne correspondant à u = 1. Dans ce cas, on a associé- à l'urgence u = 1, l'interdiction du démarrage d'un compresseur.

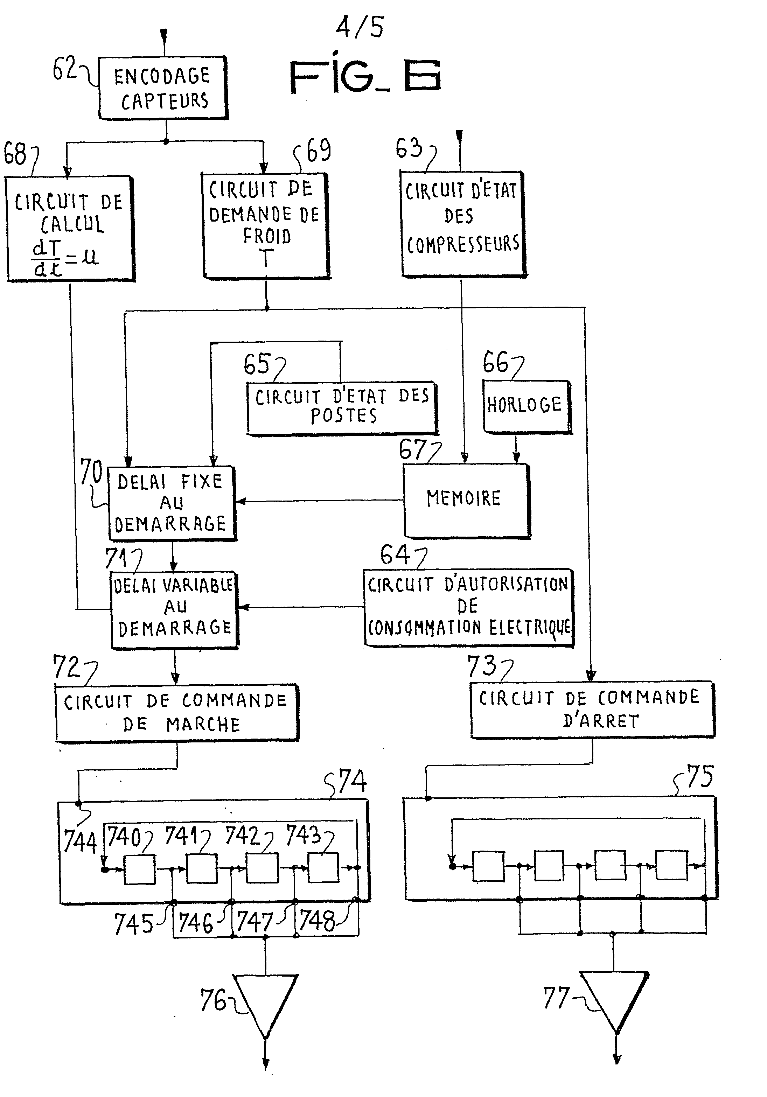

A la figure 5 on a représenté un autre diagramme d'évaluation des délais de démarrage des compresseurs. Ce diagramme peut servir à illustrer un fonctionnement d'un retardateur de démarrage de compresseur ou d'un connecteur à une alimentation électrique pour d'autre consommateurs électriques. Notamment, cette méthode peut être utilisée pour retarder éventuellement le démarrage de dégivreurs ou de ventilateurs de soufflage, etc. La courbe 49 représente la succession 610-614 des démarrages successifs d'un certain nombre d'appareils (ici compresseurs). Cette courbe représente, à chaque changement de créneau, le démarrage d'un certain nombre d'appareils de puissances constantes. Le problème de la tarification de l'énergie électrique est double :
1- Il impose à chaque client un niveau d'abonnement 50 représentant en fait la puissance totale installée à ne pas dépasser pour éviter une surtaxe de dépassement de contrat.
2- Le distributeur de puissance électrique incite par des tarifs horaires variables, ses clients à contribuer à ce que la courbe des puissances consommées dans le temps soit la plus lisse possible. Ainsi, il apparaît que durant des tranches de période de temps relativement courtes (de l'ordre de 10 minutes), des coefficients de tarification successifs sont appliqués qui mettent le prix du Kilowatt consommé à des niveaux différents selon l'heure de la journée. Si une tranche de tarification (de durée de l'ordre de 10 minutes) correspond à l'heure du démarrage de consommateurs non rioritaires qui entraineraient un surcoût, on diffère à leur démarrage. A la figure 5 on a représenté un cas particulièrement défavorable. A la fin du créneau 611, on remarque un arrêt du fonctionnement d'un certain nombre d'appareils. On constate que le créneau 612 est de consommation très réduite. A l'instant 61, qui correspond d'ailleurs ici à la fin du créneau 612, une très forte demande de puissance entraîne la formation d'un créneau 613. On remarque que le créneau 613 dépasse le niveau 50 du contrat permis. Le créneau 613 ne dure que jusqu'à l'instant 615 assez proche de 61. On remarque que la surconsommation au créneau 613 peut être évitée si on retarde le démarrage de l'instant 61 à l'instant 615. En détectant avant sa connexion au réseau, si la puissance demandée ne fait pas 'passer au dessus d'un seuil prédéterminé 50, on permet d'éviter les surconsommations.

Selon la seconde forme de tarification, dit tarification horaire, si l'instant 61 coïncide avec le début d'une tranche horaire à forte tarification, il peut être intéressant de différer à la tranche suivante le démarrage des consommateurs électriques entraînant la consommation au niveau du créneau 613. Pour cela un retard peut être fixé lui aussi de façon à dépasser la zone de tarification maximume.

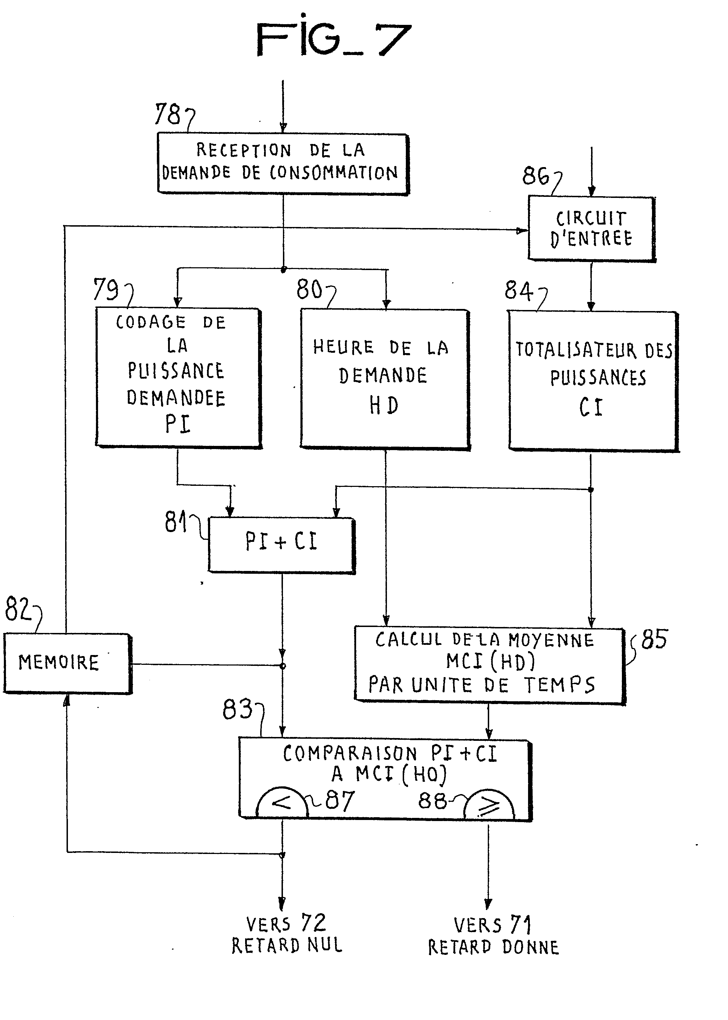

A la figure 6, on a représenté un schéma de programmateur de fonctionnement d'une centrale frigorifique multicompresseurs selon l'invention. Le circuit 62 d'encodage des capteurs est un circuit d'entrée des données de captage qui dépend de la technologie des capteurs utilisés. Dans le cas où les capteurs utilisés sont des capteurs analogiques, le circuit 62 est un circuit de conversion analogique numérique qui permet de fournir au programmateur selon l'invention, des données de captage compatibles avec le code de l'appareil. Dans le cas où les capteurs sont de type numérique, le circuit 62 est un simple circuit de mise en format des données fournies par les capteurs.

Les différents capteurs sont placés sur le collecteur d'admission 13 qui permet d'ammener le fluide frigorigène aux quatres compresseurs 1-4. Ces capteurs permettent de connatre instantanément la température ou bien en valeur variable réelle ou bien par place de niveau si ce sont des capteurs à hystérésis. Dans tous les cas, on a besoin de connaître l'état de la température à l'entrée des compresseurs et la vitesse d'évolution en fonction du temps de la température frigorifique. Le circuit 68 de calcul de l'urgence permet d'évaluer l'urgence d'un démarrage de compresseurs. Ce circuit, réalisé d'une manière connue en soit, permet de mesurer tout d'abord la vitesse de variation de la température. Dans un exemple de réalisation, deux capteurs de température réglés à 1 de différence l'un de l'autre sont excités successivement quand la température varie. Un circuit compteur de temps permet d'évaluer la vitesse c'est à dire le nombre de degrés par unité de temps écoulé. Cette valeur est alors utilisée pour évaluer l'urgence u de démarrage. Dans l'exemple de réalisation préféré, les valeurs de la variation des températures sont réparties en quatre plages successives. La première plage correspond à une évolution lente du phénomène de température ; à cette plage est associée l'urgence 0. On décide de démarrer un seul compresseur après un délai fixe de une minute. La seconde plage de valeur de la vitesse juste supérieure correspond à une urgence u = 1 ; elle correspond à une diminution du délai de démarrage du premier compresseur à 30 secondes et en cette urgence u = 1 autorise au bout de une minute le démarrage d'un second compresseur. La troisième plage de valeur suppérieure de la vitesse de variation de la température correspond à l'urgence u = 2. Elle correspond au démarrage immédiat d'un premier compresseur, suivi 30 secondes après, du démarrage du deuxième compresseur. La quatrième plage de valeurs de la vitesse de variation de la température correspond à la valeur de l'urgence u = 3. Cette valeur entraîne le démarrage immédiat du premier compresseur, puis immédiatement après le démarrage du deuxième compresseur et enfin au bout d'un délai de 30 secondes, le démarrage du troisième compresseur.

Ces différents plages de variation, fournies par le compteur de temps de montée (ou de descente) de la température dans la centrale, sont codées en autant d'adresses d'une mémoire préenregistrée qu'il y a de plages. Cette mémoire contient pour chaque valeur de l'urgence les ordres de démarrage (ou d'arrêt) des compresseurs prévus dans le critère d'urgence, comme il a été décrit plus haut.

D'autres critères d'urgence peuvent être établis à partir de la vitesse de variation de la température. Le nombre de compresseurs mis en circuit avec des délais variables au démarrage dépend essentiellement de la nature de l'installation et de la nature des charges qui lui incombe.

Un circuit 69 de demande de froid T permet de tenir compte de la différence de température qui existe entre la température de fonctionnement désirée et la température physique du système. Quand l'écart constaté entre la température T relevée aux capteurs grâce au circuit 62 et la température de fonctionnement désirée de l'installation dépasse un certain seuil, une demande de froid est considérée qui met en route le programmateur selon l'invention. Pour celà, afin de protéger les compresseurs, un circuit 70 de calcul d'un délai fixe au démarrage est associé au programmateur. Ce circuit 70 reçoit d'une mémoire 67 la liste des états instantannés des compresseurs. Le programmateur, grâce à cette mémoire, a la connaissance de l'histoire des démarrages ainsi que leurs dates successives fournies par une horloge 66. D'autre part, un circuit 65 d'état des différents postes, permet de connaître l'existence de dégivrages ou de conditions de fonctionnement particulières de chacun des postes de travail. L'ensemble de ces informations permet de déterminer une liste des compresseurs prêt à démarrer au bout d'un délai fixé par le circuit 70. A l'échéance du délai fixe au démarrage, un signal identifiant le compresseur prêt à démarrer est fourni au circuit 71 de calcul d'un délai variable au démarrage. Ce circuit fonctionne comme une ligne à retard qui ne transmettra qu'au bout d'un temps fixé en fonction du critère d'urgence u et d'un ordre d'un circuit d'autorisation de consommation électrique 64, l'ordre de démarrage au circuit 72 de commande de marche. En effet, deux types de délais variables sont appliqués dans le programmateur de fonctionnement selon l'invention. Le premier délai variable est fixé par l'urgence comme on a vu plus haut. Le deuxième critère de calcul d'un délai variable est fourni par le circuit d'autorisation de consommation électrique 64 comme il a été décrit à la figure 5. Ce circuit 64 peut appartenir à une installation extérieure au programmateur dans le cas où la centrale frigorifique fait partie d'un ensemble comprenant d'autres consommateurs électriques que des appareils de production de froid et/ou une gestion de la consommation électrique de l'ensemble de l'installation globale est réalisée. Dans ce cas, le processeur de gestion de la consommation électrique qui peut être du genre délesteur-relesteur, autorise ou non le programme selon l'invention à consommer une puissance déterminée. _{J3}ans une autre variante d'exécution le circuit 64 est réalisé à l'intérieur du programmateur selon l'invention.

A la sortie du circuit 71, le programmateur selon l'invention émet un signal de validation fourni à un circuit 72 de commande de marche. Ce circuit permet de gérer un registre 74 à glissière. Le registre 74 comporte 4 cellules 740-743 en nombre égal au nombre des compresseurs de la centrale. Chaque cellule du registre est associée à un compresseur. Ainsi la cellule 740 est associée au compresseur 1 de la figure 1, la cellule 741 au compresseur 2 de la figure 1, la cellule 742 au compresseur 3 de la figure 1 et la cellule 743 au compresseur 4 de la figure 1. Le registre 74 est chargé initialement par un seul élément binaire actif (1) et trois éléments binaires passif (0, 0, 0). A une commande réalisée à l'entré 744, on progresse d'une cellule à l'autre. La cellule 743 finale étant bouclée sur l'entré de la cellule 740, on réalise ainsi un passage circulaire du "1" enregistré dans le registre à glissière 74. La lecture au sorti 745-748 du "1" permet de démarrer le compresseur associé à la cellule en question. Ainsi la sortie 745 à la cellule 740 est associée au compresseur 1. Si un "1" est lu à la sortie 745 le compresseur 1 démarre. L'ensemble des sorties 745-748 est connecté à un circuit 76 de transmission de l'ordre de démarrage du programmateur de fonctionnement selon l'invention aux contacteurs 5-8 qui mettent les compresseurs 1-4 en marche.

Les autres sorties du registre 74 étant au niveau "0", aucun ordre de démarrage n'est possible. On garantit ainsi qu'un seul compresseur démarrera à la fois. Cette disposition présente l'avantage de limiter l'appel total de courant en évitant que deux compresseurs se mettent en marche simultanément. En effet le démarrage d'un moteur électrique entraîne une forte demande de puissance.

Une logique analogue avec les mêmes délais 70, 71 peut être associée à un circuit de commande d'arrêt 73. Dans l'exemple de réalisation préféré, le circuit de commande d'arrêt 73 élabore un ordre d'arrêt quand le circuit 69 de commande de froid reconnaît que la température réelle est proche ou inférieure à la température de fonctfonnement. L'ensemble des compresseurs en marche est alors successivement arrêté par circulation d'un "1" dans chacune des cellules d'un registre à glissière 75 analogue au registre 74. Un circuit 77 permet de transmettre ces ordres aux différents contacteurs comme il a été décrit pour le circuit 73.

A la figure 7 a été représenté un exemple de réalisation d'un circuit d'autorisation 64 de consommation électrique intégré au programmateur selon l'invention. On peut connecter la sortie du circuit 71 de calcul de délai variable au démarrage à l'entré du circuit d'autorisation de consommation électrique 64. A l'entrée de ce circuit, on trouve un circuit 78 de réception de la demande de consommation. Cette demande de consommation comprend l'identification du compresseur à mettre en marche et l'heure à laquelle ce démarrage doit être effectué. Cette heure de démarrage comprend le délai fixe au démarrage de sauvegarde à partir du dernier démarrage du compresseur en question et le délai calculé en fonction de l'urgence comme il a été vu plus haut. Le circuit 78 est connecté à un premier circuit 79 de codage de la puissance demande PI. En effet chaque compresseur peut être codé en fonction d'une puissance unité. Ainsi si les compresseurs sont de puissances différentes 10KW, 30KW, 40KW et 50KW on peut associer à chacun des compresseurs des poids 1, 3, 4 et 5. Le circuit de codage 79 réalise une telle opération. D'autre part le circuit 78 est connecté à un second circuit 80 de calcul de l'heure de la demande HD. Quand la sortie du circuit 78 est activée, une horloge accordée à l'heure légale permet d'enregistrer l'heure HD de demande de démarrage.

D'autre part, un totalisateur 84 des puissances actuellement en service à l'heure HD (soit le total CI) permet de connaître le niveau de la puissance consommée avant la demande de mise en marche du compresseur. Un circuit additionneur 81 fait la somme du total en circuit et de la valeur de la puissance du compresseur dont on demande la mise en marche. Cette valeur est fournie d'une part à une mémoire 82 qui stocke temporairement la valeur totale PI + CI, et d'autre part à un comparateur 83 qui compare le total PI + CI à un seuil de control 1 MCI (HD) qui permet de limiter la consommation électrique. Le seuil MCI (HD) est calculé ou bien enregistré à l'avance. Dans le cas où la fonction de seuil MCI (HD) est enregistrée à chaque période de tarification HD une valeur de la consommation maximale acceptée est enregistrée dans une mémoire 85. La valeur fournie à chaque instant HD de demande de puissance permet de comparer la puissance totale demandée à la puissance totale permise. Si la valeur est inférieure, le circuit 64 d'autorisation accorde l'autorisation. La valeur de la mémoire 82 est donc lue et est adressée à un circuit d'entrée 86 du totalisateur 84. D'autre part la sortie 87 de comparateur, validée quand le total PI + CI est inférieur à la fonction de contrôle, est connectée au générateur 71 de délai variable au démarrage. La sortie 87 indique que le retard à ajouter au titre de l'autorisation de consommation électrique est nul. Dans le cas contraire, la sortie 88 qui correspond à une valeur totale PI + CI dépassant la fonction de contrôle de MCI (HD), transmet au circuit 71 de calcul de délai variable au démarrage, une information concernant l'autorisation de démarrage. Dans un exemple de réalisation, le signal émis vers 71 est interprété par le circuit 71 comme étant un retard de 5 minutes à ajouter au délai variable fourni par le circuit de calcul de l'urgence 68. Dans un autre exemple de réalisation, le retard fourni par la sortie 88 du comparateur 83 est modulé en fonction de la tarification horaire selon un calcul pré-déterminé enregistré par exemple dans une mémoire morte.

La mémoire 82 dont la lecture est validée par un signal de sortie 87 est connectée au circuit d'entrée 86. Dans un second mode de réalisation, le circuit 86 permet de tenir compte aussi des autres circuits de consommation de l'ensemble de l'installation dans laquelle la centrale est intégrée. Dans ce cas, le circuit d'entrée 86 comporte un codeur analogue au circuit 79 pour toutes les puissances fournies par le reste de l'installation au totalisateur 84. Ce circuit permet donc de rendre l'enregistrement des autres puissances consommées, extérieurs à la centrale dans la mémoire du circuit 84 homogène. Dans un exemple de réalisation, ces autres consommateurs sont les dégivreurs.

Le circuit 85 de stockage de la fonction de contrôle peut être un circuit de calcul d'une moyenne MCI (HD). Pour celà le circuit 85 de mémorisation de la fonction de seuil en fonction des différentes tranches horaires correspondantes à différentes heures HD peut être réalisé de deux façons différentes. Dans un premier mode de réalisation, le circuit 85 comprend une mémoire de masse dans laquelle est enregistrée la suite des valeurs MCI (HD) correspondant à la puissance maximale admise pour l'ensemble de l'installation. Cette mémoire de masse est connectée à chaque tranche horaire HD à un registre dont la sortie est connectée au comparateur 83.

Dans un second mode de réalisation, le circuit 85 comporte aussi un circuit de calcul de la fonction de contrôle. Ce circuit de calcul permet de limiter les pointes de courant aux heures indues au dessus du seuil admissible. Pour celà, on réalise pour chaque unité de temps, pour chaque heure à tarification spéciale, un calcul de la moyenne de la consommation réalisé par l'installation pendant des périodes de temps fixées. Par exemple, on calcule sur quinze jours pour toutes les heures HD la consommation réellement effectué et on calcul la moyenne que l'on enregistre à l'heure HD. Pour réaliser ce calcul il faut donc un totalisateur pour chaque heure de chaque période à tarification spéciale. Puis il faut un circuit de calcul de la moyenne pour chacune de ces tranches horaires.

## Revendications

1. Programmateur de commande pour centrale frigorifique multicompresseurs, caractérisé en ce qu'il comporte un organe de démarrages successifs (68-77) d'un nombre prédéterminé de compresseurs en fonction de la température frigorifique et d'une urgence au démarrage.

2. Programmateur selon la revendication 1, caractérisé en ce qu'il comporte un circuit de calcul (71) d'un délai variable du démarrage de chaque compresseur (1-4).

3. Programmateur selon la revendication 2, caractérisé en ce que le circuit (71) de calcul du délai variable du démarrage de chaque compresseur est relié à un circuit (68) de calcul d'une urgence au démarrage.

4. Programmateur selon la revendication 3, caractérisé en ce que le circuit (68) de calcul d'une urgence au démarrage est un circuit de calcul de la vitesse d'évolution de la vitesse de la température en fonction du temps.

5. Programmateur selon la revendication 4, caractérisé en ce que le circuit de calcul (68) de l'urgence .comporte au moins deux capteurs de température et un compteur de temps qui permet de mesurer la différence de temps de variation de la température pour un écart de température déterminé entre les deux capteurs, cette mesure étant une estimation de l'urgence de démarrage et/ou d'arrêt.

. 6. Programmateur selon la revendication 3 ou 5, caractérisé en ce qu'il comporte une mémoire pré-enregistrée dont les adresses correspondent aux plages successives de l'urgence et dont le contenu est un ordre de démarrage ou d'arrêt prédéterminé.

7. Programmateur selon la revendication 1, caractérisé en ce qu'il comporte aussi un organe de calcul (70, 67) d'un délai fixe qui permet d'interdire à chaque compresseur (1-4) en service de démarrer avant le déroulement de ce délai à partir du dernier démarrage de ce compresseur.

8. Programmateur selon la revendication 7, caractérisé en ce que l'organe (70, 67) comporte aussi une mémoire (67) qui enregistre pour chaque compresseur l'heure de son dernier démarrage et son état.

9. Programmateur selon l'une des revendications précédentes, caractérisé en ce qu'il comporte une horloge pilote (66) accordée sur l'heure légale pour synchroniser chaque circuit du programmateur.

10. Programmateur selon la revendication 2, caractérisé en ce que il comporte aussi un circuit (64) d'autorisation de consommation électrique en fonction de la puissance du compresseur à démarrer, de la tranche de tarification horaire à l'heure de démarrage et d'une valeur horaire de seuil à ne pas dépasser.

11. Programmateur selon la revendication 10, caractérisé en ce que le circuit (64) d'une autorisation de consommation comporte un organe d'émission de la demande de puissance à un délesteur-relesteur extérieur au programmateur et un organe de réception de l'autorisation de démarrage.

12. Programmateur selon la revendication 10, caractérisé en ce qu'il comporte un circuit (79) de codage de la puissance (PI) demandée, un circuit (80) d'enregistrement de l'heure (HD) de la demande, la puissance (PI) demandée étant envoyée à une première entrée d'un additionneur (81), un totalisateur (84) contenant la somme des puissances (CI) en action à l'heure (HD) de la demande étant connecté à une seconde entrée de l'additionneur (81), la sortie de l'additionneur (81) étant connectée à une première entrée d'un comparateur (83), et en ce que une mémoire (85), qui comporte les différents enregistrements d'une fonction de seuil (MCI (HD)) indiquant par tranche horaire (HD) un niveau de puissance consommée à ne pas dépasser, est connectée à une seconde entrée du comparateur (83), une première sortie (87) étant validée si la somme (PI + CI) est inférieure au seuil MCI (HD) autorisant un démarrage sans délai supplémentaire du compresseur, une seconde sortie (88) validée sinon, qui est connectée au circuit (72) pour fournir un délai prédéterminé au démarrage.

13. Programmateur selon la revendication 12, caractérisé en ce que la valeur (PI + CI) fournie par l'additionneur (81) à l'heure (HD) est enregistrée dans une mémoire (82).

14. Programmateur selon la revendication 14, caractérisé en ce que le circuit d'entrée (86) fournit la nouvelle valeur (CI) de la puissance en service au totalisateur (84) si la sortie (87) du comparateur (83) est validée.

15. Programmateur selon la revendication 14, caractérisé en ce que le circuit d'entrée (86) comporte aussi un soustracteur de la puissance arrêtée par la logique (73) d'arrêt de la valeur (CI) des puissances consommées du totalisateur (84).

16. Programmateur selon la revendication 14, caractérisé en ce que le circuit d'entrée (86) comporte un circuit de codage du poids des consommations de différents consommateurs extérieurs à la centrale dont les puissances consommées sont' ajoutées à leur mise en service au contenu du totalisateur (84) et un soustracteur qui les retire du contenu du totalisateur (84) quand elles sont mises hors service.

17. Programmateur selon la revendication 12, caractérisé en ce que la mémoire (85) de la fonction de seuil de contrôle de la consommation horaire contient un enregistrement préétabli.

18. Programmateur selon la revendication 12, caractérisé en ce que la mémoire (85) comporte aussi un circuit de calcul de la fonction de seuil de contrôle en fonction des différentes valeurs enregistrées dans le totalisateur (84) aux courts des différentes périodes (HD), qui réalise le calcul de la puissance moyenne (MCI (HD)) à chaque tranche tarifaire.
